# EUROPEAN PATENT SPECIFICATION

(11) **EP 4 168 620 B1**
(45) Date of publication and mention of the grant of the patent: **28.10.2026**
(21) Application number: 21737739.9
(22) Date of filing: 21.06.2021
(51) Int. Cl.: D06M 11/74, B64D 45/02, C09D 5/24, C08J 5/24, C08J 7/06

(54) **A METHOD FOR FORMING A FIBRE COMPOSITE**
VERFAHREN ZUR HERSTELLUNG EINES FASERVERBUNDES
PROCÉDÉ DE FORMAGE D'UN COMPOSITE DE FIBRES

(30) Priority: 22.06.2020 GB 202009496
(43) Date of publication of application: 26.04.2023
(73) Proprietor: Cranfield University, Cranfield, Bedfordshire MK43 0AL (GB)
(72) Inventor: KOZIOL, Krzysztof, Cranfield, Bedfordshire MK43 0AL (GB)
(74) Representative: Haseltine Lake Kempner LLP
(86) International application number: PCT/GB2021/051567
(87) International publication number: WO 2021/260355

(56) References cited:
- CN-A- 105 803 814
- CN-A- 108 951 122
- CN-A- 109 972 409
- CN-A- 110 117 408
- US-A1- 2018 077 828

## Description

### Technical Field

The present invention relates to a method for forming a graphene-infused carbon fibre composite.

### Background

One widely accepted consequence of climate change is that the frequency and strength of storms, for example tropical storms, will increase. It is predicted that traditional air frame materials for aircraft will not be capable of withstanding the increased turbulence. For at least this reason, it is desirable to improve the properties and manufacturing methods of materials, including air frame materials.

Carbon fibre composites are already being used as an air frame material, and have the potential to withstand the storms of the future. Carbon fibre composites are often formed from layers of interwoven carbon fibre mesh pre-impregnated with a resin, for example a thermosetting epoxy resin.

In order to survive lightning strikes, a metal mesh is often incorporated into the carbon fibre composite airframe in order to conduct a lightning strike away from the point of contact. However, the metal mesh adds significant weight to the airframe, with knock-on consequences on fuel efficiency and payload capacity.

In order to improve the final properties of the carbon fibre composite, including mechanical performance, thermal conductivity and electrical conductivity, graphene may be incorporated into the carbon fibre composite, without significantly increasing the overall composite weight.

CN 105 803 814 A discloses a graphene-based high-strength conductive cloth. The graphene-based high-strength conductive cloth comprises a base material and conductive glue layers. The two faces of the base material are covered with conductive glue layers comprising carbon nanotubes.

CN 108 951 122 A discloses a method for producing modified polyester fibers. Graphene sheet layers exist inside and outside polyester fibers of modified polyester fiber products; and the polyester fiber products include polyester fibers, polyester yarns and polyester fabrics. Graphene is attached or added inside and outside the polyester fibers.

CN 109 972 409 A discloses a conductive composition containing graphene for a waterborne electric heating functional coating and application of the conductive composition.

CN 110 117 408 A discloses a method for toughening composite material interlayers by using nanometer multi-layer graphene.

US 2018/077828 A1 discloses a carbon nanomaterial composite sheet and a method for making a carbon nanomaterial composite sheet that may include a layer of a carbon nanomaterial structure being bonded to a carrier layer, the carrier layer being fabricated from a porous metalized nonwoven material.

### Statements of Invention

According to a first aspect of the present disclosure, there is provided a method of forming a graphene-infused fibre composite, the method comprising providing graphene consisting of graphene particles having a mean particle diameter less than 10 microns; providing the graphene particles in a solvent to form a mixture, e.g. suspension, slurry or paste, the concentration of graphene in the mixture being between 0.5% and 3.5% by weight; and applying the mixture to a surface of a pre-impregnated fibre composite layer, the pre-impregnated fibre composite layer being impregnated with a polymer. The polymer may be a thermosetting polymer (for example: epoxy resin) or a thermoplastic polymer (for example: nylon or Polyphenylene sulfide). Alternatively, the polymer (e.g. polymer particles) may be provided in combination with the graphene particles.

The fibre composite may be a carbon fibre composite, a glass fibre composite or any other type of fibre composite. The mixture may otherwise be applied to a fibre layer and the polymer may be applied together with or after the graphene particles.

The present inventors have determined that previously-proposed graphene-infused carbon fibre composites may be improved by incorporating graphene in greater concentrations. For example, at concentrations of graphene in excess of the percolation threshold, long range electrical conductance is possible.

Previously-proposed methods to incorporate graphene into carbon fibre composites may have involved mixing of graphene particles into the resin prior to infiltration of the resin into the carbon fibre mesh. However, beyond a certain threshold (typically around 5 wt% graphene but it can be lower or higher), the viscosity of the resin increases dramatically, such that a limit of graphene loading is reached, beyond which infiltration is difficult or impossible. The present inventors have determined that this limit is below the percolation threshold for long range conductive networks to be formed.

Further, the present inventors have determined that, using these previously-proposed methods, filtration of graphene may occur, in which graphene particles may be filtered out by the carbon fibre mesh during the infusion process, leading to a composite without a uniform graphene distribution (and concentration) in the resin infusion direction of the composite. This may also cause a spatial variation in conductivity as well as potential introduction of localised defects leading to variation of mechanical properties. These existing graphene-infused carbon fibre composites may thus still be susceptible to mechanical performance issues such as delamination, in which the carbon fibre mesh may split into layers, the resin matrix may separate from the carbon fibre mesh, or the resin may split along the interface between graphene-rich and graphene-poor regions.

Additionally, the present inventors have determined that previously-proposed methods of incorporating graphene into carbon fibre composites may involve the use of functionalised graphene in order to aid incorporation into the resin. However, functionalised graphene has inferior electrical, thermal and mechanical properties when compared with graphene (non-functionalised graphene). Functionalised graphene also has problems with viscosity at increased concentrations.

Accordingly, in order to improve the thermal, mechanical and electrical properties of a fibre composite component, it would be desirable to increase the concentration of graphene within the polymer of the fibre composite. It would be particularly advantageous if graphene were to be present in a fibre composite at concentrations in excess of the percolation threshold, and at concentrations that overcome the abovementioned mechanical performance issues. Further, a method of incorporating non-functionalised graphene into fibre composite would be advantageous.

Providing the graphene particles in a solvent may comprise mixing, suspending or dispersing graphene particles. The solvent may comprise an alcohol (such as isopropanol or ethanol), chloroform, water and/or acetone. The concentration of graphene particles in the mixture may be between 0.7% and 3% by weight.

As mentioned above, the mean particle diameter of the graphene particles is less than 10 microns. However, in other examples, the mean particle diameter of the graphene particles may be less than 5 microns, 1 micron, 0.5 microns or 0.1 microns.

Providing graphene particles having a mean diameter less than 10 microns may comprise providing a first group (e.g. a class or distribution) of graphene particles having a first mean particle diameter; and providing a second group of graphene particles having a second mean particle diameter.

The first mean particle diameter and the second mean particle diameter may be different. Each of the first mean particle diameter and the second mean particle diameter may be less than 10 microns. Alternatively, only one of the first mean particle diameter and the second mean particle diameter may be less than 10 microns. The second mean particle diameter may be at least six times greater than the first mean particle diameter (e.g. ten times greater). The second mean particle diameter may be at least ten times greater than the first mean particle diameter. For example, the first mean particle diameter may be 0.5 microns or less, and the second mean particle diameter may be 3 microns or more.

The first and second groups of graphene particles may be distinct from one another. Each of the first and second groups may have a distribution of size about the respective mean particle diameters. Each distribution may comprise a peak or modal value. The peak of the first group of graphene particles may be different from the peak of the second group of graphene particles. The peak or modal value of each group may be substantially equal to the mean particle diameter of the respective group. A tail of the distribution of the first group of graphene particles may overlap with a tail of the distribution of the second group of graphene particles. The graphene particles may comprise a bimodal distribution of particle diameters.

The method may comprise providing the first group of graphene particles and the second group of graphene particles in a ratio between:
one part of the first group of graphene particles to one part of the second group of graphene particles; and
one part of the first group of graphene particles to four parts of the second group of graphene particles, by weight.

The solvent may consist essentially of an alcohol (such as isopropanol or ethanol), chloroform, water and/or acetone, e.g. such that the solvent may be free from surfactants. The graphene may consist essentially of non-functionalised graphene. The graphene particles may not substantially comprise graphene oxide.

Applying the mixture to the surface of the fibre composite layer (e.g. pre-impregnated fibre layer) may comprise spraying. Applying the mixture to the surface of the fibre composite layer (e.g. pre-impregnated fibre layer) may comprise spreading. For example, the mixture may be applied by coating with a bar. The mixture may also be applied during a roll to roll process in which the pre-impregnated fibre composite layer is transferred from one roll to another and the mixture may be applied by spreading, spraying or any form of application.

The method may further comprise heating or curing a polymer of the fibre composite layer. The method comprises passing an electrical current through the graphene so as to heat the polymer of the fibre composite layer. Heating the fibre composite layer may comprise, concurrently with heating, applying a pressure to the polymer and fibre composite layer. Applying only heating may give one graphene distribution. Applying heating and pressure may give another graphene distribution, which may have a different quality to that obtained with heating only.

The method may comprise heating the pre-impregnated fibre composite layer such that at least a portion of the graphene particles substantially diffuses into the polymer, e.g. by selecting a temperature, pressure and/or time profile of the heating process. The method may comprise heating the pre-impregnated fibre composite layer such that a portion of the graphene particles does not diffuse into the polymer, e.g. by selecting a temperature, pressure and/or time profile of the heating process.

The method may further comprise applying heat and/or pressure to the fibre composite layer such that a resulting graphene-infused fibre composite comprises a substantially discrete graphene layer in which a concentration (e.g. by weight) of graphene in the graphene layer may be 90% or higher (e.g. approximately 100%).

The method may further comprise applying the mixture to a further (e.g. opposite) surface of the fibre composite layer.

The method may comprise applying the mixture to at least one of a surface and a further surface (e.g. top and/or bottom surfaces) of a further fibre composite layer; layering the fibre composite layer and the further fibre composite layer; and heating the fibre composite layer and the further fibre composite layer. Multiple layers may be provided in this way to provide a multi-layer composite. The graphene mixture may be applied to top and/or bottom surfaces of the fibre composite layers.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of Drawings

For a better understanding of the present invention, and to show more clearly how it may be carried into effect, reference will now be made, by way of example, to the accompanying drawings, in which:
Figure 1 is a flow chart of a method according to the present invention;
Figure 2 is a flow chart of an example method according to the present invention;
Figures 3a-3d (collectively Figure 3) show example schematic concentration profiles of graphene within a carbon fibre composite;
Figure 4 is a chart showing an example of the advantages of the present invention; and
Figure 5 is a system according to the present invention.

### Detailed Description

The term "graphene particles" will be used throughout the foregoing disclosure and may refer to particles which consist essentially (e.g. consist only) of graphene. "Graphene" as referred to herein may be considered to consist essentially (e.g. consist only) of non-functionalised graphene, i.e. does not substantially comprise graphene oxide or any alternative functional groups.

The graphene particles may comprise any shape which may be suitable for use in the present invention. For example, the graphene particles may comprise graphene platelets (e.g. nanoplatelets) or graphene flakes, such that they are substantially planar, having dimensions in one plane significantly greater than a thickness perpendicular to that plane.

Additionally or alternatively, the graphene particles may comprise a substantially spherical or equiaxed shape, having similar dimensions along three axes.

The term "particle diameter" will be used to refer to the diameter of a graphene particle. For a planar graphene particle (e.g. a graphene flake or platelet), the particle diameter will refer to the in-plane dimension of the graphene particle. Where a mean particle diameter is referred to, it should be understood that this may be by number, e.g. not by weight. The particle diameter may be determined by dynamic light scattering (DLS) and/or Transmission Electron Microscope (TEM) analysis. The graphene powder can be analysed using electron microscopy in which a powder sample may be deposited on a TEM grid and flake size measured using the microscope. Regarding DLS, graphene powder may be dispersed in a solvent at high dilution and the sample is irradiated by laser light so that the particle-size distribution of the sample may be determined from the intensity pattern of diffracted and scattered light.

For a graphene platelet or graphene flake, references to a "thickness" will refer to the dimension of the graphene particle out-of-plane.

A graphene platelet or flake may have an in-plane diameter between 0.1 µm and 10 µm, and an out-of-plane thickness between 0.5 nm and 3 nm. Each graphene platelet may thus comprise one or more layers of graphene stacked on top of one another (e.g. up to 10 layers). Although the above values refer to typical dimensions of graphene particles, graphene particles having dimensions outside of the above ranges may still be suitable for the present invention and the above values are given as examples.

Although Van der Waals forces may cause agglomeration of individual graphene particles into a larger agglomerate comprising a plurality of graphene particles, the skilled person will readily be able to determine the mean diameter of the constituent particles of such an agglomerate. Accordingly, mean particle diameters referenced throughout the foregoing disclosure may refer to the diameter of individual graphene particles rather than the diameter of the agglomerates. For example, where a mean particle diameter of less than 10 microns is described, an agglomerate may exist comprising a plurality of graphene particles each of diameter less than 10 microns, but the overall diameter of the agglomerate may be greater than 10 microns. Such an agglomerate may still satisfy the condition of a graphene particle having a mean particle diameter less than 10 microns.

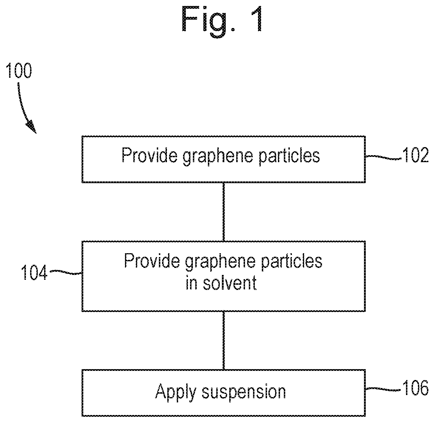

With reference to Figure 1, a method 100 comprises providing in a first step 102 graphene consisting of graphene particles having a mean particle diameter less than 10 microns. Substantially all (e.g. all) of the graphene present may be in the form of graphene particles having a mean particle diameter less than 10 microns. The skilled person will understand that this step may comprise providing graphene particles having a distribution of particle diameters, the mean particle diameter of the distribution being less than 10 microns. For example, a maximum graphene particle diameter may be greater than 10 microns (e.g. a maximum particle diameter of 15 microns, such that no graphene particle has a diameter greater than 15 microns). As stated above, agglomerated graphene particles comprising individual graphene particles having a diameter less than 10 microns would still satisfy this condition.

In other embodiments, the mean particle diameter of the graphene particles may be less than 5 microns, 1 micron, 0.5 microns or 0.1 microns.

The method 100 comprises in a second step 104 providing the graphene particles in a solvent so as to form a mixture, which may be a suspension, slurry, paste or any other type of mixture. The solvent may comprise isopropanol (also propan-2-ol or isopropyl alcohol), ethanol, chloroform and/or acetone. The solvent may comprise water and/or dimethyl sulphoxide (DMSO). The solvent may consist essentially, for example only, of one or more of isopropanol, ethanol, chloroform, acetone, DMSO or water. The skilled person will understand that the solvent may be selected according to the environment in which the mixture is to be formed and used according to the method 100.

Providing the graphene particles in a solvent may comprise sonication (e.g. ultrasonication). The sonication process may ensure that the graphene particles do not form agglomerates, or at least that any agglomerates present at the time of addition of the graphene particles to the solvent are broken up. In one example, a mixture comprising 3 wt.% graphene particles and 97 wt.% ispropanol is sonicated (e.g. using a Brandson Digital Sonifier at a power of 30% of amplitude) for 10 minutes using cycles of 50 seconds of sonication and 10 seconds of no sonication to avoid overheating and subsequent evaporation of the solvent.

Providing the graphene particles may comprise dispersing the graphene particles. Providing the graphene particles may comprise forming a colloidal suspension or mixture. Providing the graphene particles in the solvent may comprise mechanical agitation or mixing, for example by means of a blender or stirrer.

The graphene particles may be provided in the solvent so as to achieve a concentration between 0.5% and 3.5% by weight. The inventors have discovered that such a concentration advantageously aids application and also permits rapid evaporation that allows subsequent layers to be readily applied. The mixture may not comprise any binder or surfactant, as additional substances may not readily evaporate (e.g. may not evaporate at all) and may affect the properties of the graphene and thus the carbon fibre composite. The mixture may thereby consist essentially (e.g. consist only) of a solvent and graphene particles. For example, the mixture may consist of 2 wt.% graphene and 98 wt.% isopropanol.

After providing the graphene particles within the solvent, and in the absence of a surfactant, there may be a tendency for agglomerates to form (e.g. re-form) within the mixture with time as a result of Van der Waals forces between the graphene particles. Further, there may be a tendency for the graphene particles to sediment/settle from the mixture with time. It may therefore be beneficial to carry out a third step 106 shortly after second step 104.

The method 100 additionally comprises the third step 106 of applying the mixture to a surface of a layer of a fibre layer, such as a pre-impregnated carbon fibre composite (PICFC). The PICFC may have been pre-impregnated with a polymer, such as a thermosetting polymer (for example: a resin, e.g. epoxy resin) or a thermoplastic polymer (for example: nylon or Polyphenylene sulfide). The polymer may be a thermoset polymer (e.g. an epoxy resin or a cyanate ester resin), such that it may require heating prior to use of the carbon fibre composite as a component. The polymer may be a thermoplastic polymer (e.g. Nylon, Polylactic Acid, PolyPhenylene Sulphide, PolyEther-Ether Ketone, PolyEther-Ketone-Ketone or any other polymer). In other words, the graphene-solvent mixture is applied to the PICFC after the carbon fibre has been pre-impregnated with polymer. The polymer used to pre-impregnate the carbon fibre may not comprise (e.g. may not substantially comprise) graphene particles. Partially pre-cured PICFC may be suitable for the present application, having the additional advantage of being relatively handleable and manipulable whilst being relatively stable and non-toxic. The pre-impregnated carbon fibre composite material may be readily purchasable from manufacturers (e.g. a staple commercial product), such that the method of the present invention may be commenced using a staple material without requiring special preparation.

A thermoplastic polymer powder may be sprayed onto a fibre fabric, e.g. to form the pre-impregnated fibre layer. Initial heating may be used to adhere the polymer powder while final heating may be done during the composite manufacture. The initial heating may be performed rapidly to make the powder stick to the fibre/cloth. However this is just done quickly. The graphene may be applied together with, before or after the polymer powder, e.g. prior to the initial heating. The thermoplastic powder and graphene powder may mix very well, especially when micron size or nano size polymer powder is used as it may match the graphene particles.

The skilled person will understand that the viscosity of the mixture will vary according to the concentration of graphene particles in the mixture. Accordingly, the method of application used may depend upon the proportion of graphene particles in the mixture. The present inventors have determined that below approximately 2 wt.% graphene loading in isopropanol, a relatively low viscosity mixture is formed which may be capable of being sprayed. Above approx. 2 wt.% graphene loading in isopropanol, a more viscous mixture is formed, e.g. a gel or a paste, which may be too viscous to be sprayed. This more viscous mixture may instead be spread over a surface of the PICFC, e.g. using draw down bars. For example, a mixture consisting of 0.7 wt.% graphene and 99.3 wt.% isopropanol may be best for spraying, whereas a mixture consisting of 3.0 wt.% graphene and 97 wt.% isopropanol may be best for spreading.

If the mixture is applied to the fibre layer or PICFC by spraying, the solvent may be selected according to the parameters and set-up of the spraying process. For example, isopropanol may be selected due to its ability to evaporate quickly without producing toxic vapours. This may be particularly beneficial where there are constraints on the amount of ventilation possible at the location at which the mixture is applied, e.g. if the mixture is to be applied to a material in-situ, or in an enclosed workspace.

Upon application, the solvent may begin to evaporate rapidly. For example, when spraying an isopropanol mixture, evaporation may begin as soon as the mixture has left the nozzle, such that by the time the mixture reaches the PICFC, up to 70% of the solvent may have already evaporated. In this example, the remaining solvent ensures that the mixture is still sufficiently 'wet' to adhere to the PICFC. As the solvent continues to evaporate, van der Waals forces between the graphene particles and PICFC then take over and allow the graphene particles to remain on the surface of the PICFC after the solvent has completely evaporated.

The amount of graphene applied to the surface of the PICFC can be varied according to the desired final concentration of graphene, and thus final properties, of the carbon fibre composite. For example, if higher concentrations of graphene are desired, then the graphene particles may be provided in the solvent at higher proportions. Similarly, the means for applying the mixture to the PICFC can be controlled in order to apply either or more or less mixture, and thus graphene, to the surface of the PICFC.

If applied by spraying, it may be possible to control: the flow rate of the mixture through the nozzle; the loading of graphene in the mixture (until viscosity makes the mixture unsprayable); the rate at which the nozzle moves relative to the surface of the PICFC; the thickness of the PICFC to which the mixture is applied; how many surfaces of the PICFC the mixture is applied to; the spraying pressure; and/or the distance between the nozzle and the PICFC.

If applied using draw down bars, the thickness, and thus quantity, of the mixture applied to the surface of the PICFC can be controlled by: varying the gap between the draw down bar and the surface of the PICFC; varying the thickness of the bar used to spread the mixture, as well as the rate of travel of the drawdown bar relative to the surface of the PICFC. In this way, a uniform coating of graphene particles on the surface of the PICFC may be achieved.

Further, after application of the mixture to the surface of the PICFC a first time, the mixture may be applied to the PICFC subsequent times (e.g. with a short interlude therebetween to allow the solvent to evaporate) until a desired quantity of graphene has been applied to the surface of the PICFC. Similarly, the mixture may be applied to at least one surface of the PICFC (e.g. two surfaces or both sides of a layer PICFC).

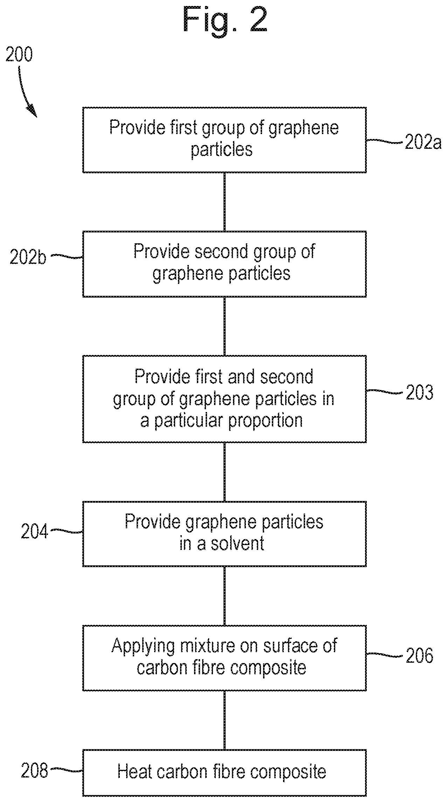

With reference to Figure 2, an example method 200 according to the present invention is described. The method 200 comprises in a first step 202a providing a first group or class of graphene particles having a first mean particle diameter and in a second step 202b providing a second group or class of graphene particles having a second mean particle diameter. The first class of graphene particles and the second class of graphene particles consist essentially of graphene, (e.g. consist essentially of non-functionalised graphene particles, the graphene therein not substantially comprising functional groups). The mean particle diameter of the graphene particles, including the first class of graphene particles and the second class of graphene particles, is less than 10 microns. For example, the first mean particle diameter may be less than 10 microns and the second mean particle diameter may be greater than 10 microns. Alternatively, both the first mean particle diameter and the second mean particle diameter may be less than 10 microns. In a preferred example, the second mean particle diameter is substantially 10 times greater than the first mean particle diameter. By way of example, the first mean particle diameter may be less than 1.0 micron (e.g. less than 0.5 microns), and the second mean particle diameter may be between 3 and 10 microns. In a most preferred example, the first mean particle diameter is approximately 0.5 microns, and the second mean particle diameter is approximately 5 microns.

The skilled person will understand that there will be a distribution of particle diameters about the mean particle diameter of each of the first and second class of particle diameters. For example, the graphene particles may comprise a bimodal distribution, wherein the modal particle diameter of the first class of particles is equal to the first mean particle diameter and the modal particle diameter of the second class of particles is equal to the second mean particle diameter. A broad or narrow distribution of particle diameters about the mean particle diameter may be suitable for the present invention. A tail of the distribution of the first class may overlap with a tail of the second class. In the most preferred example above, the second mean particle diameter of 5 microns may comprise a particle size distribution in which the majority of graphene particles have a diameter between 2 and 8 microns (e.g. D₁₀ = 1 micron, D₅₀ = 5 microns, 0₉₀ = 10 microns). The first mean particle diameter may be 0.5 microns, with minimum and maximum particle diameters of the first group being 0.15 microns and 1.0 micron respectively..

The method 200 comprises a step 203 providing the first class of graphene particles and the second class of graphene particles in a particular proportion. In a preferred example, the first class of graphene particles and the second class of graphene particles are provided in a ratio of between: one part of the first class of graphene particles to one part of the second class of graphene particles; and one part of the first class of graphene particles to four parts of the second class of graphene particles (i.e. between 50:50 and 20:80), by weight. In a most preferred example, for a first mean particle diameter of 0.5 microns and a second mean particle diameter of 5 microns, the first class of graphene particles and the second class of graphene particles are provided in the ratio of one part of graphene particles having a mean particle diameter of 0.5 microns and four parts of graphene particles having a mean particle diameter of 5 microns (i.e. 20:80), by weight.

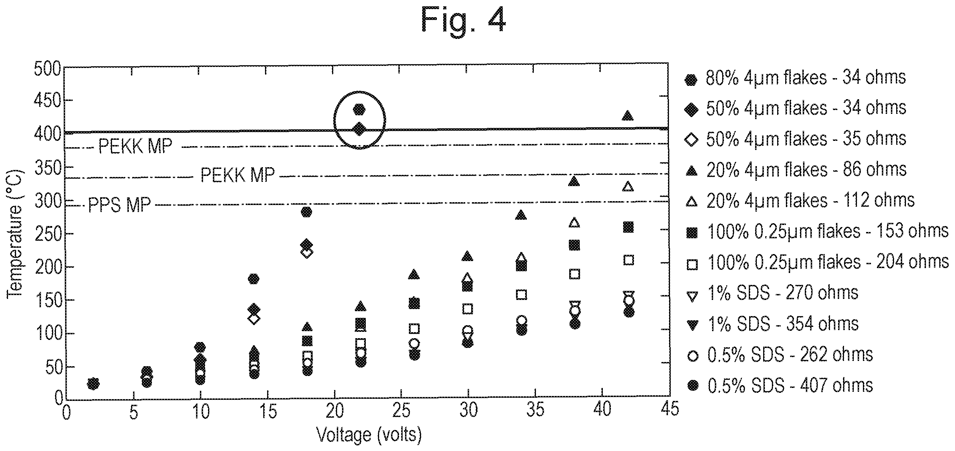

It will be understood by the skilled person that the exact proportion of each of the first class of graphene particles and the second class of graphene particles may depend on the exact size relationship between the first mean particle diameter and the second mean particle diameter. For example, upon performance of the method 200, provision of the first class and the second class of graphene particles according to the most preferred proportions described above may allow the final material to comprise a graphene concentration throughout the matrix in excess of the percolation threshold, such that long range electrical conductivity is achieved. However, for particle classes having different mean particle diameters, a different proportion of each class may be required to achieve the percolation threshold. This may be determined, for example, by performing the analysis described in relation to Figure 4.

The present inventors have determined that providing too high a proportion of the second class of graphene particles may make the graphene coating too flakey (i.e. mechanically unstable), such that physical manipulation of the PICFC during a manufacturing method may lead to loss of at least part of the graphene coating.

The method 200 comprises a step 204 of providing the first class of graphene particles and the second class of graphene particles in a solvent to produce a mixture. In a preferred example, the solvent is isopropanol, and the graphene particles are provided such that the mixture comprises at least 2 wt.% graphene particles in isopropanol solvent. In a most preferred example, the mixture consists of 3 wt.% graphene particles and 97 wt.% isopropanol, and the mixture is sonicated for 10 cycles of: 50 seconds of sonication at 30% of amplitude; and 10 seconds of no sonication, to prevent overheating and evaporation of the solvent.

The skilled person will readily be able to determine a suitable sonication regime according to the solvent used and the degree of agglomeration present in the graphene particles.

The method 200 comprises a step 206 of applying the mixture to a surface of the PICFC 206. As stated above, as the loading of graphene particles in the solvent increases, so will the viscosity of the mixture. Accordingly, the degree of graphene loading in the mixture may determine the manner in which the mixture is applied to the carbon fibre composite at step 206. Above 2 wt.% graphene, spreading may be more suitable than spraying. For example, a mixture consisting of 0.7 wt.% graphene and 99.3 wt.% isopropanol may be sprayed, whereas a mixture consisting of 3.0 wt.% graphene and 97 wt.% isopropanol may be spread. Accordingly, applying the mixture to a surface of the PICFC may comprise spreading or spraying. In a preferred example, the method comprises spreading a mixture consisting of 3 wt.% graphene particles and 97 wt.% isopropanol, using drawdown bars, across a surface of the PICFC to form a coating of uniform thickness on the surface of the PICFC. In one example, a thickness of 1000 microns is applied to each of a first surface and a second surface of the PICFC. This may be achieved by means of 20 successive applications of the graphene-solvent mixture, each successive application being of a thickness of 50 microns of graphene once the solvent has evaporated.

The skilled person will be able to determine the quantity of graphene to be applied to the surface of the PICFC according to the desired concentration of graphene in the final carbon fibre composite after performance of step 208. For example, a mass of graphene particles required to exceed a percolation threshold of 2 vol.% graphene loading within the polymer can be calculated.

The method 200 comprises a step 208 of heating the PICFC having had the graphene mixture applied thereto. The heating 208 of the PICFC may allow the graphene applied to the surface of the PICFC to diffuse into the PICFC, depending on the desired properties of the final carbon fibre composite.

Ordinarily, PICFCs are heated once shaped into the component which they are to form. This heating may be for the purpose of curing the polymer, if a thermosetting resin is used, and/or for the purpose of ensuring cohesion between multiple layers of PICFC.

According to the present invention, the PICFC (once coated with graphene particles) may also be heated. This heating of the PICFC 208 may be according to a different (i.e. atypical) heating regime. This heating of the PICFC 208 may be for the purpose of facilitating diffusion of the graphene particles from the surface of the PICFC into the polymer matrix of the PICFC and/or for the purposes for which a PICFC is normally heated at this stage of use (e.g. as stated above). For example, the heating of the PICFC may be carried out after insertion into a mould.

When compared with typical heating and/or curing regimes, the heating 208 of the PICFC according to the present invention may have a different heating rate, reach a different maximum temperature, have a different hold duration at the maximum temperature, and have a different cooling rate. In some examples, a two-step heating regime may comprise a first step for facilitating diffusion of graphene throughout the polymer matrix, and a second step for enabling curing and/or cohesion of adjacent PICFC layers. The first step may have a first hold temperature, the PICFC being held at the first hold temperature for a significant duration to ensure diffusion of the graphene into the polymer matrix. A suitable first hold temperature may be determined by analysis of diffusion coefficients and/or empirical analysis. The second step may have a second hold temperature, the second hold temperature being higher than the first hold temperature, the PICFC being held at the second hold temperature for a short duration to initiate curing of the polymer.

Alternatively, a two-step heating regime may not be required (e.g. at a certain temperature, graphene diffusion and curing may be able to occur simultaneously). In a preferred example, heating is accompanied by the application of pressure to encourage the graphene particles to diffuse into the polymer.

The heating regime may be devised according to the polymer material used and the degree of graphene diffusion which is required. For example, heating a PICFC pre-impregnated with a thermoset resin will allow the resin to cure to produce a rigid component, and simultaneously allow the graphene to diffuse into the resin. Heating a PICFC pre-impregnated with a thermoplastic polymer may allow adjacent PICFC layers to bond together whilst simultaneously allowing the graphene to diffuse into the polymer.

Heating of the PICFC may be performed by autoclave heating or out-of-autoclave heating. In-autoclave methods may comprise heating the material using the heat generated by the autoclave. Out-of-autoclave methods may comprise causing an electrical current to flow within the material (e.g. within at least one layer of graphene particles), such that the material is heated (e.g. by Joule or resistive heating). Causing of a current to flow may comprise: attaching electrodes to the material such that the electrodes are in electronic communication with at least one layer of graphite particles within the material; and applying a voltage between the electrodes. This may be achieved by direct application of a voltage across the material (e.g. using Joule heating or resistive heating by passing an electric current through the material. Causing a current to flow through the graphene layer may be combined with heating by another means, e.g. in an autoclave. The heating (whether by electrical and/or external means) may be supplemented by an applied pressure, for example of 200, 300, 400, 800 or 1,000 kPa (2, 3, 4, 8 or 10 bar).

The temperature and duration of heating may be chosen to achieve a particular distribution of graphene within the composite component.

By varying the heating regime, different concentration profiles across the PICFC may be achieved from the starting point of a square wave concentration profile described above. For example, heating regimes having a significant hold duration may allow the graphene to diffuse throughout the polymer, thereby achieving a near-homogeneous (e.g. homogenous) concentration of graphene through the polymer matrix.

The table below shows how different quantities of graphene (column four: "Graphene in panel [mg]") may be applied to a surface of a PICFC measuring 100 mm x 100 mm by 0.9 mm in thickness. For completeness, C-73 refers to a 2x2 twill fabric of 200 gsm and 6K fibres of intermediate modulus with a (polymer) resin volume fraction of 42%, and C-74 refers to a plain weave fabric of 78 gsm and 3.5K fibres of intermediate modulus with a (polymer) resin volume fraction of 45%. The first column represents the thickness of graphene deposited in each application (or coating) of graphene; the second column represents the number of those layers applied to the PICFC, and the third column represents the total thickness of graphene applied by the successive coatings. The final three columns represent the concentration of graphene within the composite: the first two of these columns represent the concentration as a percentage of the composite as a whole (including the resin and the fibre), whereas the final column represents the concentration of graphene within the resin alone (excluding the fibre). It will thus be noted that the present method 200 is capable of producing a concentration of graphene within the (polymer) resin of a carbon fibre composite of 44.7 wt.%. This is significantly in excess of the threshold required for long range electrical conductivity and represents a significant improvement on previously-proposed arrangements.

***Panel of 100 x 100 x 0.9 mm**

| | **Coating** | **Coating** | **Total coating** | **Graphene in** | **Concentration** | | |
|---|---|---|---|---|---|---|---|
| | **thickness [µm]** | **layers** | **thickness [*µ*m]** | **panel [mg]*** | **[vol%]** | **[wt%]** | **in resin [wt%]** |
| **C-73** | 24 | | 192 | 135 | 0.7 | 1.1 | 3 |
| | 120 | 8 | 960 | 675 | 3.4 | 5.5 | 14.9 |
| | 360 | | 2880 | 2016 | 10 | 16.5 | 44.7 |
| **C-74** | 10 | 20 | 200 | 140 | 0.7 | 1.2 | 2.9 |
| | 50 | | 1000 | 700 | 3.4 | 6.2 | 14.5 |

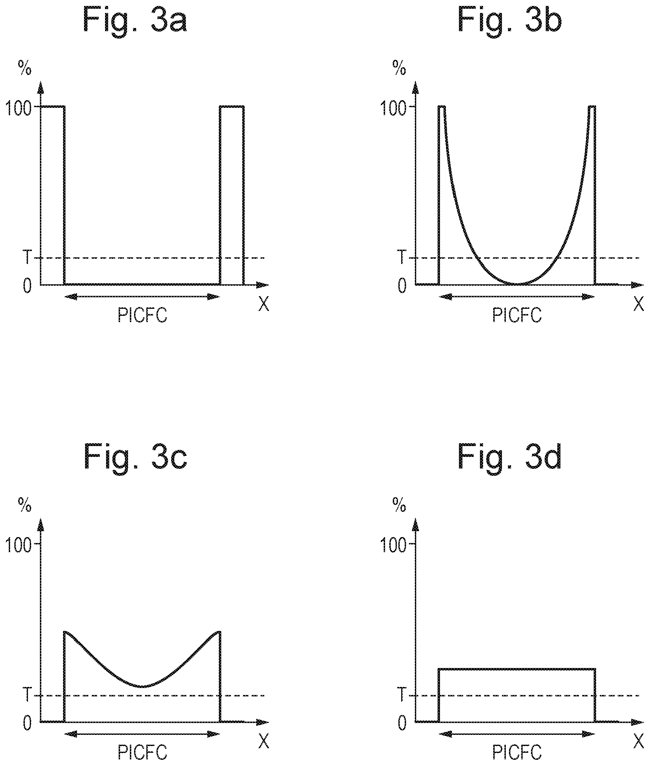

With reference to Figure 3, example graphene concentration profiles within the polymer of a graphene-coated PICFC are shown at different stages of heating 208. The x-axis represents the distance along a section through a PICFC; the left and right extremities of the profiles represent surfaces of the PICFC to which the graphene-solvent mixture has been applied. Regions where the section through the PICFC intersects the carbon fibre mesh are not shown for ease of understanding - in other words, only the graphene concentrations within the polymer are shown. It should be understood that the profiles are schematic only, and the relative dimensions of the graphene coatings and the PICFC are not to scale.

Figure 3a shows a graphene concentration profile across a single layer of PICFC having had a graphene mixture applied to both surfaces thereof at step 206, but prior to heating at step 208. The graphene concentration within the polymer against distance across the composite resembles a square wave, having a maximum concentration of approximately 100% graphene at the graphene layer on the surface of the PICFC, and a concentration of approximately 0% graphene within the polymer-fibre PICFC layer, the transition from 100% to 0% graphene being at the interface between the surface of the PICFC and the graphene coating adhered to the surface. The value T indicated on the y-axis denotes a threshold concentration of graphene within the polymer matrix required for a certain property to be conferred on the composite (e.g. a percolation threshold for long range conductivity). Having layers with a high concentration of graphene (e.g. 100%), e.g. with little or no mixing with the resin/polymer, provides a layer with excellent heat and electrical conduction properties.

Figure 3b shows an example concentration profile across the single layer of PICFC after a heating regime has been performed at step 208. Heating of the PICFC has allowed the graphene applied to the surface to at least partially diffuse into the polymer matrix of the PICFC. A maximum of graphene concentration still exists at each surface of the PICFC, and a minimum of graphene concentration still exists at the midpoint. Towards the surfaces of the PICFC, the graphene concentration exceeds the threshold T, whereas towards the midpoint of the PICFC, the graphene concentration is below the threshold T. However, according to this concentration profile, there is no sudden discontinuity in concentration of graphene within the polymer matrix, such that certain modes of delamination between graphene-rich and graphene-poor regions of the polymer may be prevented.

Figure 3c shows a further example concentration profile across the single layer of PICFC after a second heating regime has been performed. The second heating regime may comprise the first heating regime, such that profile shown in Figure 3c may be reached by passing through the profile shown in Figure 3b. As with Figure 3b, heating of the PICFC has allowed the graphene applied to the surface to at least partially diffuse into the polymer matrix of the PICFC, such that in Figure 3c graphene has now diffused towards and reached the midpoint of the PICFC. Accordingly, a maximum of graphene concentration is still found at each surface of the PICFC, and a minimum of graphene concentration is still found at the midpoint of the PICFC, however the minimum in graphene concentration is greater than zero. The graphene particles have thereby penetrated the whole thickness of the PICFC to reach the midpoint of the section through the PICFC. The minimum in graphene concentration is greater than the threshold T. It should be noted that, although the graphene concentration across the PICFC may not be homogeneous, the quantity of graphene applied to the surfaces of the PICFC and diffusing into the polymer matrix of the PICFC is sufficient for the graphene concentration throughout the polymer matrix to exceed the threshold T for a certain property to be conferred on the composite. In other words, a homogeneous concentration of graphene throughout the polymer matrix may not be required, as long as the minimum or minima of graphene concentrations exceed a minimum concentration of graphene required for the desired materials property (e.g. a percolation threshold or a mechanical stability threshold). As such, an equilibrium in graphene concentration and diffusion need not necessarily be reached throughout the thickness of the PICFC for a certain threshold to be reached. Having graphene distributed (infused into the resin) may enhance the electrical and thermal properties in the "Z" direction (e.g. perpendicular to a fibre layer). However, because the graphene particles are further apart from each other it may have a lower conductivity to a graphene layer which is tightly bonded with itself (e.g. as shown in Fig. 3a).

Nevertheless, Figure 3d shows an example concentration profile across the thickness of the PICFC where a homogenous graphene concentration has been reached by means of a third heating regime allowing an equilibrium condition of graphene concentration to be reached. The third heating regime may comprise the first and/or second heating regimes. The uniform concentration of graphene is in excess of the threshold T throughout the PICFC.

It will be appreciated that each of the graphene concentration profiles shown in Figures 3a, 3b, 3c and 3d may occur in that sequence in a PICFC being heated at step 208. For example, a PICFC may have an initial square wave concentration profile shown in Figure 3a, before heating at step 208 allows gradual diffusion of the graphene particles into the polymer, such that the concentration profile shown in Figure 3b may occur after a relatively short time (e.g. before reaching a hold temperature). Upon continued heating (e.g. at the hold temperature), graphene particles may continue to diffuse into the polymer towards the midpoint, such that the concentration profile shown in Figure 3c may be reached. If heating is continued, the equilibrium condition shown in Figure 3d may be reached.

Accordingly, the present method may represent a novel means (e.g. the only known means) of producing a graphene infused, enriched or enhanced carbon fibre composite having a concentration of graphene throughout the polymer matrix in excess of an electrical conduction threshold (e.g. a percolation threshold required for long range conductivity), a thermal conductivity threshold, and/or a mechanical performance threshold (e.g. required to prevent certain modes of delamination).

It may be desirable to produce a graphene concentration profile which maintains different concentrations in different regions (e.g. a periodic graphene concentration profile varying in a sinusoidal, saw-tooth or square wave manner). Such a heating regime may comprise the application of a relatively high temperature for a shorter duration. Alternatively, a lower temperature may be applied for a longer duration to achieve a near-homogeneous concentration of graphene throughout the polymer matrix.

It will be understood that the concentration profiles shown in Figure 3 and described above in relation to a single sheet of PICFC be reached within each layer of PICFC in a component comprising multiple layers of PICFC. For example, method steps 202a to 206 may be performed with multiple layers of PICFC, such that graphene is applied to each surface of the multiple layers of PICFC, the multiple layers subsequently being stacked/layered prior to performance of heating at step 208. The heating may be achieved by passing an electrical current through one or more of the graphene layers, e.g. concurrently or sequentially. Electrical heating may be used to effectively glue the pre-impregnated layers together. If needed electrical heating may be used to heat the composite again to peel off one or more layers. In this case the graphene layer may stay within the composite. After heating at step 208, the concentration profiles of graphene shown in Figure 3 may then be reached within the polymer of each layer of PICFC. A component comprising multiple layers of PICFC, within each of which a materials threshold T has been exceeded may thus be achieved.

With reference to Figure 4, a demonstration of some advantages of the methods of the present invention and the materials thereby produced are described. Figure 4 shows temperatures reached by a range of materials when a voltage is applied thereto, the temperature effectively being a measure of power dissipated within the material according to the relationship $P = \frac{{V}^{2}}{R}$ where P is the power dissipated across the sample, V is the applied voltage and R is the resistance of the material. Accordingly, more power will be dissipated across a material with a lower resistance, such that a higher a temperature will be reached. The temperature reached by a material can therefore be used to determine the resistance of the material.

In particular, the method used to obtain Figure 4 comprised performance of the method 100 using a graphene-isopropanol mixture of 1 wt.% graphene, the graphene having a first mean particle diameter of 0.5 microns and a second mean particle diameter of 5 microns. The graphene-isopropanol mixture was sprayed on to each surface of a layer of PICFC measuring 40mm x 30 mm for 30 seconds, 15 times in total, such that a total of 30mg of graphene was deposited on each surface. A compression load of 1 to 15 tons was applied to the sample to encourage diffusion of the graphene into the layer of PICFC. Copper electrodes were used to apply a DC voltage of up to 42 volts to the along the 30mm dimension, the temperature of each sample being measured by a Fluke 62 max IR thermometer gun.

As shown in Figure 4, for graphene particles having a proportion of the second class of graphene particles in excess of 50%, the temperature reached by the PICFC sample is dramatically greater than those samples having a proportion of the second class below this threshold. This indicates that a percolation threshold for electrical conductivity is reached more readily when graphene particles of a second class having a diameter at least 6 times greater than that of a first class (e.g. first class having a mean particle diameter of 0.5 microns and a second mean particle diameter of 5 microns) are provided in proportions with the first class being in excess of 50% of the second class of graphene particles (e.g. by weight).

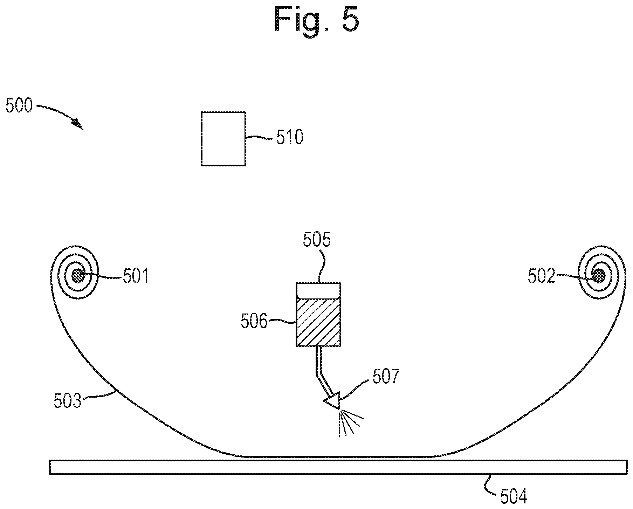

With reference to Figure 5, a system 500 is configured to perform the method 100 of the present invention. The system 500 comprises a first roller 501 and a second roller 502, the first roller being configured to feed a PICFC layer 503 to the second roller 503 in a continuous manner. The PICFC layer 503 may pass across a supporting surface 504 for supporting the PICFC layer. A vessel 505 is configured to hold a quantity of a graphene-solvent mixture 506 (e.g. a graphene-solvent described above), the vessel 505 being in fluidic communication with a nozzle 507, such that the mixture 506 may pass from the vessel to the nozzle 507. The nozzle 507 is configured to spray the mixture 506 on a surface of the PICFC layer 503 as the PICFC layer 503 passes from the first roller 501 to the second roller 502. The nozzle 507 may be configured to be movable in one or more dimensions (e.g. horizontally and/or vertically), such that the portion of the PICFC layer 503 being sprayed can be controlled, and so that the rate of deposition on the PICFC layer 503 can be controlled.

The first roller 501, the second roller 502 and/or the nozzle 507 may be in communication (not shown) with a controller 510, the controller 510 being configured to control a passage of the PICFC layer 503 between the first roller 501 and the second roller 502, and a position of the nozzle 507. The controller may additionally be configured to control a rate of passage of the PICFC layer 503, a rate of movement of the nozzle 507 and/or a flow rate of the mixture 506 through the nozzle 507.

The controller 510 may be configured to control the rate of passage of the PICFC layer 503 and the flow rate of the mixture 506 such that the solvent has evaporated (e.g. substantially and/or essentially evaporated) by the time each sprayed portion of the PICFC layer 503 reaches the second roller 502.

### Advantages

The present invention thereby provides a means for achieving increased graphene loading within the polymer of, *inter alia,* a carbon fibre composite material. Increased graphene loading improves the electrical and thermal conductivity and phonon transport properties of the carbon fibre composite material, and improves the affinity between the polymer matrix and the carbon fibre mesh, such that certain modes of failure, including delamination at the matrix-fibre interface, may be reduced and/or prevented.

Additionally, the present invention provides a means for more selectively controlling and varying the concentration and distribution of graphene throughout a carbon fibre composite material.

Improved thermal and electrical properties may allow metal meshes typically included in carbon fibre composite air frames to be obviated, such that the weight of the air frame is reduced, permitting greater payload capacity and thus efficiency of the aircraft.

Although the present invention has been described in the context of pre-impregnated carbon fibre composite materials, it will be appreciated by the skilled person that the present invention may equally be applicable to a composite comprising an alternative fibre or mesh to carbon fibre, e.g. glass fibre, ceramic fibre, polyester fibre or any other type of fibre.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method of forming a graphene-infused fibre composite, the method comprising:
providing graphene consisting of graphene particles having a mean particle diameter less than 10 microns;
providing the graphene particles in a solvent to form a mixture, the concentration of graphene in the mixture being between 0.5% and 3.5% by weight; and
applying the mixture to a surface of a pre-impregnated fibre composite layer, the pre-impregnated fibre composite layer being impregnated with a polymer.

2. The method of claim 1, wherein providing graphene particles comprises:
providing a first group of graphene particles having a first mean particle diameter; and
providing a second group of graphene particles having a second mean particle diameter,
wherein the first mean particle diameter and the second mean particle diameter have different values, each of the first mean particle diameter and the second mean particle diameter being less than 10 microns.

3. The method of claim 2, wherein the second mean particle diameter is at least six times greater than the first mean particle diameter.

4. The method of claim 2 or 3, wherein the method comprises providing the first group of graphene particles and the second group of graphene particles in a ratio between:
one part of the first group of graphene particles to one part of the second group of graphene particles, by weight; and
one part of the first group of graphene particles to four parts of the second group of graphene particles, by weight.

5. The method of any of the preceding claims, wherein the mixture consists essentially of a solvent and graphene particles, wherein the solvent consists essentially of an alcohol (such as isopropanol or ethanol), chloroform, water and/or acetone, such that the solvent is free from surfactants.

6. The method of any of the preceding claims, wherein the graphene consists essentially of non-functionalised graphene such that the graphene particles do not substantially comprise graphene oxide.

7. The method of any of the preceding claims, wherein applying the mixture to the surface of the pre-impregnated fibre composite layer comprises spraying or spreading.

8. The method of any of the preceding claims, further comprising heating the polymer of the pre-impregnated fibre composite layer.

9. The method of claim 8, wherein the method comprises passing an electrical current through the graphene so as to heat the polymer of the pre-impregnated fibre composite layer.

10. The method of claim 8 or 9, wherein the method comprises, concurrently with heating, applying a pressure to the pre-impregnated fibre composite layer.

11. The method of any of the preceding claims, further comprising applying heat and/or pressure to the pre-impregnated fibre composite layer such that a resulting graphene-infused fibre composite comprises a substantially discrete graphene layer in which a concentration of graphene in the graphene layer is 90% or higher.

12. The method of any of the preceding claims, further comprising:
applying the mixture to a further surface of the pre-impregnated fibre composite layer.

13. The method of any of the preceding claims, further comprising:
applying the mixture to at least one of a surface and a further surface of a further pre-impregnated fibre composite layer;
layering the pre-impregnated fibre composite layer and the further pre-impregnated fibre composite layer; and
heating the pre-impregnated fibre composite layer and the further pre-impregnated fibre composite layer.

## Patentansprüche

1. Verfahren zur Herstellung eines graphendurchsetzten Faserverbundes, wobei das Verfahren Folgendes umfasst:
Bereitstellen von Graphen, das aus Graphenpartikeln mit einem mittleren Partikeldurchmesser von weniger als 10 Mikron besteht;
Bereitstellen der Graphenpartikel in einem Lösungsmittel, um eine Mischung zu bilden, wobei die Konzentration von Graphen in der Mischung zwischen 0,5 und 3,5 Gew.-% liegt; und
Aufbringen der Mischung auf eine Oberfläche einer vorimprägnierten Faserverbundschicht, wobei die vorimprägnierte Faserverbundschicht mit einem Polymer imprägniert ist.

2. Verfahren nach Anspruch 1, wobei Bereitstellen von Graphenpartikeln Folgendes umfasst:
Bereitstellen einer ersten Gruppe von Graphenpartikeln, die einen ersten mittleren Partikeldurchmesser aufweisen; und
Bereitstellen einer zweiten Gruppe von Graphenpartikeln, die einen zweiten mittleren Partikeldurchmesser aufweisen,
wobei der erste mittlere Partikeldurchmesser und der zweite mittlere Partikeldurchmesser unterschiedliche Werte aufweisen,
wobei jeder von dem ersten mittleren Partikeldurchmesser und dem zweiten mittleren Partikeldurchmesser weniger als 10 Mikron beträgt.

3. Verfahren nach Anspruch 2, wobei der zweite mittlere Partikeldurchmesser mindestens sechsmal größer als der erste mittlere Partikeldurchmesser ist.

4. Verfahren nach Anspruch 2 oder 3, wobei das Verfahren Bereitstellen der ersten Gruppe von Graphenpartikeln und der zweiten Gruppe von Graphenpartikeln in einem Verhältnis zwischen Folgendem umfasst:
einem Teil der ersten Gruppe von Graphenpartikeln zu einem Teil der zweiten Gruppe von Graphenpartikeln, bezogen auf das Gewicht; und
einem Teil der ersten Gruppe von Graphenpartikeln zu vier Teilen der zweiten Gruppe von Graphenpartikeln, bezogen auf das Gewicht.

5. Verfahren nach einem der vorhergehenden Ansprüche, wobei die Mischung im Wesentlichen aus einem Lösungsmittel und Graphenpartikeln besteht, wobei das Lösungsmittel im Wesentlichen aus einem Alkohol (wie etwa Isopropanol oder Ethanol), Chloroform, Wasser und/oder Aceton besteht, sodass das Lösungsmittel frei von Tensiden ist.

6. Verfahren nach einem der vorhergehenden Ansprüche, wobei das Graphen im Wesentlichen aus nichtfunktionalisiertem Graphen besteht, sodass die Graphenpartikel im Wesentlichen kein Graphenoxid umfassen.

7. Verfahren nach einem der vorhergehenden Ansprüche, wobei Aufbringen der Mischung auf die Oberfläche der vorimprägnierten Faserverbundschicht Sprühen oder Streichen umfasst.

8. Verfahren nach einem der vorhergehenden Ansprüche, ferner umfassend Erwärmen des Polymers der vorimprägnierten Faserverbundschicht.

9. Verfahren nach Anspruch 8, wobei das Verfahren Leiten eines elektrischen Stroms durch das Graphen umfasst, um das Polymer der vorimprägnierten Faserverbundschicht zu erwärmen.

10. Verfahren nach Anspruch 8 oder 9, wobei das Verfahren, während des Erwärmens, Aufbringen eines Drucks auf die vorimprägnierte Faserverbundschicht umfasst.

11. Verfahren nach einem der vorhergehenden Ansprüche, ferner umfassend Aufbringen von Wärme und/oder Druck auf die vorimprägnierte Faserverbundschicht, sodass ein resultierender graphendurchsetzter Faserverbund eine im Wesentlichen diskrete Graphenschicht umfasst, in der eine Konzentration von Graphen in der Graphenschicht 90 % oder höher ist.

12. Verfahren nach einem der vorhergehenden Ansprüche, ferner umfassend:
Aufbringen der Mischung auf eine weitere Oberfläche der vorimprägnierten Faserverbundschicht.

13. Verfahren nach einem der vorhergehenden Ansprüche, ferner umfassend:
Aufbringen der Mischung auf mindestens eine von einer Oberfläche und einer weiteren Oberfläche einer weiteren vorimprägnierten Faserverbundschicht;
Schichten der vorimprägnierten Faserverbundschicht und der weiteren vorimprägnierten Faserverbundschicht; und
Erwärmen der vorimprägnierten Faserverbundschicht und der weiteren vorimprägnierten Faserverbundschicht.

## Revendications

1. Procédé de formage d'un composite de fibres infusé de graphène, le procédé comprenant :
la fourniture de graphène constitué de particules de graphène ayant un diamètre particulaire moyen inférieur à 10 microns ;
la fourniture des particules de graphène dans un solvant pour former un mélange, la concentration de graphène dans le mélange étant comprise entre 0,5 % et 3,5 % en poids ; et
l'application du mélange sur une surface d'une couche composite de fibres pré-imprégnée, la couche composite de fibres pré-imprégnée étant imprégnée d'un polymère.

2. Procédé selon la revendication 1, dans lequel la fourniture de particules de graphène comprend :
la fourniture d'un premier groupe de particules de graphène ayant un premier diamètre particulaire moyen ; et
la fourniture d'un second groupe de particules de graphène ayant un second diamètre particulaire moyen,
dans lequel le premier diamètre particulaire moyen et le second diamètre particulaire moyen ont des valeurs différentes, chacun du premier diamètre particulaire moyen et du second diamètre particulaire moyen étant inférieur à 10 microns.

3. Procédé selon la revendication 2, dans lequel le second diamètre particulaire moyen est au moins six fois supérieur au premier diamètre particulaire moyen.

4. Procédé selon la revendication 2 ou 3, dans lequel le procédé comprend la fourniture du premier groupe de particules de graphène et du second groupe de particules de graphène dans un rapport compris entre :
une partie du premier groupe de particules de graphène pour une partie du second groupe de particules de graphène, en poids ; et
une partie du premier groupe de particules de graphène pour quatre parties du second groupe de particules de graphène, en poids.

5. Procédé selon l'une quelconque des revendications précédentes, dans lequel le mélange est constitué essentiellement d'un solvant et de particules de graphène, dans lequel le solvant est constitué essentiellement d'un alcool (tel que l'isopropanol ou l'éthanol), de chloroforme, d'eau et/ou d'acétone, de sorte que le solvant est exempt de tensioactifs.

6. Procédé selon l'une quelconque des revendications précédentes, dans lequel le graphène est constitué essentiellement de graphène non fonctionnalisé de sorte que les particules de graphène ne comprennent pas sensiblement d'oxyde de graphène.

7. Procédé selon l'une quelconque des revendications précédentes, dans lequel l'application du mélange sur la surface de la couche composite de fibres pré-imprégnée comprend la pulvérisation ou l'étalement.

8. Procédé selon l'une quelconque des revendications précédentes, comprenant en outre le chauffage du polymère de la couche composite de fibres pré-imprégnée.

9. Procédé selon la revendication 8, dans lequel le procédé comprend le passage d'un courant électrique à travers le graphène afin de chauffer le polymère de la couche composite de fibres pré-imprégnée.

10. Procédé selon la revendication 8 ou 9, dans lequel le procédé comprend, simultanément au chauffage, l'application d'une pression sur la couche composite de fibres pré-imprégnée.

11. Procédé selon l'une quelconque des revendications précédentes, comprenant en outre l'application de chaleur et/ou de pression sur la couche composite de fibres pré-imprégnée de sorte qu'un composite de fibres infusé de graphène résultant comprend une couche de graphène sensiblement distincte dans laquelle la concentration de graphène dans la couche de graphène est de 90 % ou plus.

12. Procédé selon l'une quelconque des revendications précédentes, comprenant en outre :
l'application du mélange sur une surface supplémentaire de la couche composite de fibres pré-imprégnée.

13. Procédé selon l'une quelconque des revendications précédentes, comprenant en outre :
l'application du mélange sur au moins l'une d'une surface et d'une surface supplémentaire d'une couche composite de fibres pré-imprégnée supplémentaire ;
la superposition de la couche composite de fibres pré-imprégnée et de la couche composite de fibres pré-imprégnée supplémentaire ; et
le chauffage de la couche composite de fibres pré-imprégnée et de la couche composite de fibres pré-imprégnée supplémentaire.
